# EUROPEAN PATENT SPECIFICATION

(11) **EP 2 216 304 B1**
(45) Date of publication and mention of the grant of the patent: **21.11.2012**
(21) Application number: 08870323.6
(22) Date of filing: 16.12.2008
(51) Int. Cl.: C03C 27/12, B32B 17/10

(54) **PROCESS FOR PRODUCING LAMINATED GLASS WITH INSERTED PLASTIC FILM**
VERFAHREN ZUR HERSTELLUNG VON VERBUNDGLAS MIT EINGESETZTEM KUNSTSTOFFFILM
PROCÉDÉ POUR PRODUIRE UN VERRE FEUILLETÉ POURVU D'UN FILM PLASTIQUE INSÉRÉ

(30) Priority: 09.01.2008 JP 2008002188
(43) Date of publication of application: 11.08.2010
(73) Proprietor: Central Glass Company, Limited, Yamaguchi 755-0001 (JP)
(72) Inventor: IZUTANI, Kensuke, Matsusaka-shi, Mie 515-0001 (JP); TAKAMATSU, Atsushi, Matsusaka-shi, Mie 515-0001 (JP); YONEKURA, Masaaki, Matsusaka-shi, Mie 515-0001 (JP); NAKAMURA, Isao, Matsusaka-shi, Mie 515-0001 (JP)
(74) Representative: Manitz, Gerhart
(86) International application number: PCT/JP2008/072859
(87) International publication number: WO 2009/087868

(56) References cited:
- WO-A1-00/46027
- WO-A1-91/19586
- WO-A1-98/41396
- WO-A1-2007/005711
- DE-A1- 3 904 191
- JP-A- 60 225 747
- JP-A- 2007 197 288
- JP-T- 2001 521 480
- US-A- 5 069 734

## Description

The present invention relates in general to a process for producing a laminated glass comprising a glass plate, a plastic interlayer, a transparent plastic film, another plastic interlayer and another glass plate which are laminated together in this order.

A laminated glass comprising two plastic interlayers having a plastic film, particularly, a Polyethylene Terephthalate film interposed therebetween and two glass plates having the two plastic interlayers interposed therebetween is known as a laminated glass that has a heat ray reflecting function.

Usually, for producing a laminated glass, an autoclave is used for effecting a high temperature high pressure treatment through which glass plates and a Polyester film are thematically bonded to one another by plastic interlayers.

In Patent Document 1, there is disclosed a laminated glass that comprises a flexible laminated sheet produced by putting between two plastic interlayers a heat ray reflecting plastic film of Polyester, and two glass plates putting therebetween the flexible laminated sheet.

In Patent Document 2, there is disclosed a laminated glass that comprises two sheets of Polyvinyl Butyral that put therebetween a near-infrared shielding film including multi-plastic layers and two glass plates that put therebetween the two sheets to constitute a laminated structure. For preventing the near-infrared shielding film from peeling off from the glass plates and/or for preventing the film from having cracks after the film is bonded to the glass plates, the document describes that when the film is exposed to a temperature of 150°C for 30minutes, the shrinkage ratio of the film should be lower than or equal to 2% in both a direction in which the film advances under production and a direction of width, and for preventing the film from having wrinkles, the document describes that when the film is exposed to the temperature of 150°C for 30minutes, the shrinkage ratio of the film should be lower than or equal to 0.5%. ,

In Patent Document 3, there is disclosed a laminated glass that comprises two PVB films that put therebetween a film of Polyethylene Terephthalate, and two glass plates that put therebetween the two PVB films to constitute the laminated glass that is free of appearance failure such as wrinkles or the like. For preventing the film from having wrinkles, the document describes that when a laminated glass is produced by putting between films of Polyvinyl Butyral a functional film with selective light transmission ability and conductivity, for suppressing an appearance failure such as winkles or the like, the thermal extension ratio of the Polyester Terephthalate in one direction should be 0.1 to 1.0% and the thermal extension ratio of the same in a direction perpendicular to the direction should be 0.1 to 1.0%.

In Patent Document 4, there is disclosed a laminated glass that employs a heat ray reflecting film produced by forming on a surface of a plastic film an indium oxide or silver layer. The document describes that the thermal shrinkage ratio of the employed plastic film at the time of a thermal processing is 1 to 20%.
Patent Document 1 : Japanese Laid-open Patent Application (Tokkaisho) 56-32352
Patent Document 2 : PCT Laid-open Application (Saikouhyo) W02005/040868 A1
Patent Document 3 : Japanese Laid-open Patent Application (Tokkaisho) 60-225747
Patent Document 4 : Japanese Laid-open Patent Application (Tokkaihei) 6-270318
WO 98/41396 A1 discloses a method for producing a curved, laminated safety glass sheet comprising the steps of: i) superimposing a prelaminated sheet consisting of the first laminated layer and a substrate sheet with its laminated layer facing the first glass sheet, ii) superimposing a band-resistant cover sheet conforming to the first glass sheet on the prelaminated sheet, iii) removing the air from the glass layer packet and subjecting it then to pressure and heat, iv) removing the cover sheet, v) superimposing a second laminated layer and a second glass sheet on the preliminarily bonded glass-film, vi) preliminarily bonding the so formed laminate by removing the air and subjecting it to pressure and heat and vii) bonding the preliminary bonded laminate into a laminated safety glass sheet by subjecting it to pressure and heat.
WO 91/ 19586 A1 discloses a process for forming a shaped laminate for use in a safety glazing, such as a vehicle window or the like, comprising the steps of i) bonding at least one transparent thermoplastic carrier layer to at least one layer of polyvinyl butyral to form a premolding composite, ii) stretching the composite to impart compound curvature thereto and form a shaped shrinkable laminate, iii) subjecting the shaped laminate to elevated temperature while constraining its edges to relief stresses in the carrier layer and iv) cooling the shaped laminate while maintaining its edges constrained.
DE 39 04 191 A1 discloses a method for producing a laminated safety glass comprising a glass plate, a polyvinyl butyral layer, a polyethylene terephthalate layer, another polyvinyl butyral layer and another glass plate, in which a film, which may be composed of one or more functional layers, is deposited e.g. via sputtering on the plastic sheet layer1, whereafter the so formed plastic foil is inserted between a plurality of the further aforementioned layers, whereafter the so formed laminate is clamped along its projecting sections without clamping the edges of the plurality of further layers and thereafter the stack of the plurality of layers is laminated while the plastic sheet layer remains clamped.
US 5,069,734 discloses a method of dimensionally stabilizing a laminate, in which an optically functional layer is bonded to a polyethylene terephthalate layer, wherein the polyethylene terephthalate layer has a surface coated with polymethylmethacrylate.
WO 00/46027 A1 discloses a laminated glass product having a polyvinyl butyral and polyethylene terephthalate sheeting.

When, in case of producing a laminated glass by putting between plastic interlayers a plastic film and putting between two glass plates the plastic interlayers, the glass plates are curved ones, it tends to occur that the plastic film has wrinkles causing an appearance failure, and when the plastic film is of a type that forms thereon an infrared ray reflecting layer, it tends to occur that the infrared ray reflecting layer has cracks.

Accordingly, the present invention aims to provide a production method for producing a plastic film-inserted laminated glass that includes a plastic film intimately put between plastic interlayers and is free of wrinkles of the plastic film and cracks of an infrared ray reflecting layer, and aims to provide a plastic film-inserted laminated glass that is produced through the production method.

The first feature of the present invention is that in a production method for producing a plastic film-inserted laminated glass that comprises a laminated film including a plastic film intimately put between plastic interlayers, the following steps are employed, which comprise a first step for subjecting a plastic interlayer and a plastic film to a thermocompression bonding, a second step for putting another plastic interlayer on the plastic film, which has been subjected to the thermocompression bonding at the first step, thereby to produce a laminated film, a third step for putting the laminated film produced at the second step between two curved glass plates thereby to produce a laminated body, a fourth step for applying pressure and heat to the laminated body, which has been produced at the third step, by using an autoclave thereby to achieve bonding of entire construction of the laminated glass and a fifth step for cutting and removing the laminated film that protrudes from edges of the curved glass plates, wherein the first step comprises a step (a) in which by using a curved glass plate or a mold plate that has a curved shape similar to a projected curved surface of the curved glass plate, the plastic interlayer is put on the projected curved surface of the curved glass plate or the projected surface side of the mold plate, a step (b) in which a tension is applied to the plastic film, a step (c) in which the plastic film is put on the plastic interlayer, which has been put on the glass plate or the projected surface side of the mold plate, while being applied with the tension, and a step (d) in which the plastic interlayer and the plastic film are subjected to the thermocompression bonding.

The second feature of the present invention is that in a production method having either one of the above-mentioned first and second features for producing a plastic film-inserted laminated glass, a radius of curvature of each of the curved glass plates is in the range from 0.9m to 3m.

The third feature of the present invention is a plastic film-inserted laminated glass that is produced through a production method having either one of the above-mentioned first, second and third features for producing a plastic film-inserted laminated glass and includes a plastic film that forms on a surface thereof an infrared ray reflecting layer.

The fourth feature of the present invention is a plastic film-inserted laminated glass that is produced through a production method having either one of the above-mentioned first, second and third features for producing a plastic film-inserted laminated glass and includes a plastic film that forms on a surface thereof a hard coat layer.

In a production method for producing a plastic film-inserted laminated glass that comprises a laminated film including a plastic film intimately put between plastic interlayers and similarly curved two glass plates having the laminated film put therebetween, the present invention provides a production method for producing a plastic film-inserted laminated glass that is free of wrinkles of the plastic film and has a satisfied external appearance and a plastic film-inserted laminated glass that is produced through the production method.

Even in case of producing a laminated glass that, like a glass pane used as a window of an automobile or a vehicle, includes curved glass plates and thus has different radius of curvature in different portions or in the same portion, the present invention provides a plastic film-inserted laminated glass that is free of wrinkles of the plastic film.

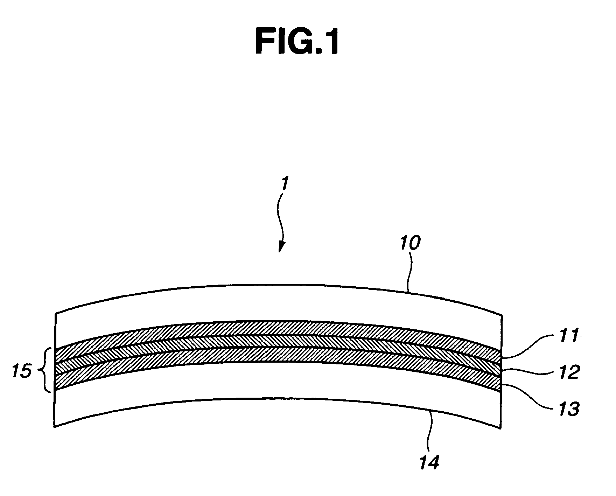

By practically using a production method of the present invention for producing a plastic film-inserted laminated glass, a curved plastic film-inserted laminated glass 1, such as one as shown in Fig. 1, is produced.

The plastic film-inserted laminated glass 1 is a laminated glass that comprises a laminated film 15 including a plastic film 12 intimately put between plastic interlayers.

As the plastic interlayers, it is preferable to use a hot melt type adhesive, such as Poly Vinyl Butyral (PVB), Ethylene Vinyl Acetate (EVA) or the like.

For the plastic film, it is preferable to use a film produced through stretching process. The film may be selected from plastic films made of Polyethylene Terephthalate, Polyethylene Naphthalate, Polycarbonate, Polymethyl Methacrylate, Polyethersulfone, Nylon, Polyarylate, Cycloolefin Polymers and the like.

Particularly, Crystalline Polyethylene Terephthalate film (PET film) produced through X,Y axes stretching process has a high heat resistance and thus the film is usable in a wide range temperature circumstance. Furthermore, since the film has a high transparency and is mass produced, the quality of the film is stabilized, and thus usage of the film is suitable for the above-mentioned plastic film.

If the thickness of the plastic film is smaller than 30µm, it tends to occur that the film is deformed and wrinkles are produced. Furthermore, it is difficult to handle the film. Furthermore, when an infrared reflecting film is formed on the film, undesired circling tends to occur due to a stress possessed by the infrared reflecting film. While, if the thickness of the film is greater than 200µm, an appearance failure tends to occur due to a poor deaeration inevitably induced at the time of the joining process. Thus, it is preferable that the film has a thickness ranging from 30µm to 200µm.

As the curved glass plates, it is preferable to use a three-dimensionally curved glass plate that is produced by bending a soda lime glass at a temperature higher than a softening point.

The three-dimensionally curved glass plate is a glass plate having a spherical surface or an ellipsoid surface or a glass plate, like an automotive front window glass (viz., windshield) having different radius of curvature in different portions.

It is preferable that the radius of curvature of the curved glass plate is in the range from 0.9m to 3m.

If the radius of curvature is smaller than 0.9m, it tends to occur that the plastic film forms wrinkles at the time of the laminating process, and thus, it is preferable that the radius of curvature is larger than 0.9m.

If the radius of curvature is too large, the shape of the glass plate becomes generally flat causing disappearance of the effective feature of the present invention by which the plastic film is free of wrinkles. That is, when the radius of curvature of the curved glass plate is smaller than 3m, the effective advantage of the present invention is induced.

The production method for producing a plastic film-inserted laminated glass comprises:
a first step that is a step for subjecting a plastic interlayer and a plastic film to a thermocompression bonding to produce a laminated film A;
a second step that is a step for putting another plastic interlayer on the plastic film of the laminated film A, which has been obtained at the first step, thereby to produce a laminated film B;
a third step that is a step for putting the laminated film B, which has been obtained at the second step, between two curved glass plates thereby to produce a laminated body;
a fourth step that is a step for applying pressure and heat to the laminated body which has been obtained at the third step; and
a fifth step that is a step for cutting and removing the laminated film that protrudes from edges of the curved glass plates, wherein the first step comprises the steps set and above.

As a heat source used in the first step for subjecting the plastic layer and the plastic film to the thermocompression bonding, it is preferable to use a heat air blower, an iron, a heat gun or the like.

Preferably, the temperature for the thermocompression bonding is in the range from 60°C to 100°C at which the plastic interlayer exhibits adhesion. If the temperature is lower than 60°C, the bonding between the plastic interlayer and the plastic film shows poor results, and if the temperature is higher than 100°C, melting of the plastic interlayer occurs which causes a hard bonding of the interlayer to the lower-positioned glass plate.

The thermocompression bonding between the plastic film and the plastic interlayer may be so made that the bonding extends throughout the entire surface of the curved glass plate or extends only along a peripheral portion of the curved glass plate. For preventing appearance of the undesired wrinkles, it is desirable to make the thermocompression bonding only along the peripheral portion.

The second step is a step by which the laminated film B that has a construction including the plastic film intimately put between the plastic interlayers is obtained.

The third step to the fifth step are the same as those that are employed when a laminated glass including only one plastic interlayer is produced. Preferably, the pressure and heat application process by the autoclave is so set as to have a temperature in the range from 90 to 150°C, a pressure lower than 1MPa and a time of about 30 minutes.

If desired, between the fourth step and the fifth step, there may be added a step for a preliminary bonding such as vacuum bag deaeration by using a rubber bag, a press deaeration by using a pressing roll or the like.

In the first step, a curved glass plate or a mold plate having a projected curved surface similar to a projected curved surface of the curved glass plate is used and the following steps are carried out, which comprise a step (a) in which by using the curved glass plate or mold plate, the plastic interlayer is put on the curved glass plate or the projected curved surface of the mold plate, a step (b) in which a tension is applied to the plastic film, a step (c) in which the plastic film is put on the plastic interlayer, which has been put on the projected curved surface of the glass plate or the projected curved surface of the mold plate, while being applied with the tension, and a step (d) in which the plastic interlayer and the plastic film are subjected to the thermocompression bonding.

The curved glass plate is generally horizontally set having its projected curved surface directed upward, and the plastic interlayer is put on the projected curved surface of the curved glass plate at step (a). Then, at step (b), a tension is applied to the plastic film. If the laminated glass thus produced is for use as an automotive window glass plate that is generally rectangular in shape, it is preferable to cut the plastic film into the shape of the window, and a certain tension is applied to the plastic film by pulling mutually opposed sides of the film in opposed directions or pulling mutually opposed corners of the film in opposed directions. When the window is triangular or generally circular, given portions of the plastic film are pulled outward for applying an entire construction of the plastic film with an even tension for the purpose of avoiding appearance of wrinkles of the plastic film.

It is desirable to cut the plastic film into a shape or size that is larger than that of the curved glass plates for the window.

If desired, with usage of a frame that is larger than the glass plates, the plastic film may be tensioned and then pressed against the plastic interlayer.

At step (c), the tensioned plastic film is put on the plastic interlayer and pressed against the plastic interlayer along the curved surface of the curved glass plate.

Then, at step (d), heat is applied to the layered sheet unit from the side of the plastic film, so that the plastic interlayer and the plastic film are subjected to a thermocompression bonding thereby to produce the laminated film A.

At the first step, in place of the curved glass plate, a mold plate that is made of metal, wood or hard resin and has a curved surface similar to the projected surface of the curved glass plate may be used.

As the plastic film, a plastic film having a hard coat layer formed on a surface thereof is usable. Since some plastic films tend to show a poor bonding to the plastic interlayer and produce whitish portions when an infrared ray reflecting layer is formed thereon, the hard coat layer is formed on a boundary surface for avoiding such undesired things.

The hard coat layer may be applied to both surfaces of the plastic film or to only one surface of the film.

If the plastic film is of the type having the infrared ray reflecting layer formed thereon, the production method of the present invention for producing a plastic film-inserted laminated glass can prevent the infrared ray reflecting layer from having cracks, and thus, usage of the production method of the present invention for producing a plastic film-inserted laminated glass is preferable.

As the infrared ray reflecting layer, a metal layer of Au, Ag, Cu, Al or the like or a multiple layer of dielectric such as TiO₂, Nb₂O₅, Ta₂O₅, SiO₂, Al₂O₃, ZrO₂, MgF₂ or the like may be suitably used.

In case of using the multiple layer of dielectric as the infrared ray reflecting layer, the infrared ray reflecting layer has such a construction that dielectric layers placed at even-numbered positions from the plastic film and dielectric layers placed at odd-numbered positions from the plastic film have different refractive indexes. If the number of the dielectric layers is smaller than or equal to three, the infrared ray reflecting layer thus produced exhibits an insufficient reflection against near-infrared rays showing no effects and if the number of the dielectric layers exceeds twelve, the membrane stress is increased and thus adhesion of the dielectric layers to the plastic film becomes poor and the film is curled. In view of this fact, it is preferable that the number of the dielectric layers is greater than or equal to four and smaller than or equal to twelve.

### Embodiments:

In the following, the present invention will be described more concretely with reference to embodiments and comparative examples.

### First Embodiment:

A plastic film-inserted laminated glass shown in Fig. 1 was produced by taking the following steps that are a first step to a fifth step.

For preparing each of curved glass plates 10 and 14, a glass plate having a size of 250mm x 350mm and a thickness of 2mm was used.

Each of the curved glass plates 10 and 14 thus prepared showed a radius of curvature ranging from 0.9m to 1m and showed 0.9m at a peripheral portion and 1m at a central portion of the glass plate.

As each of plastic interlayers 11 and 13, a PVB film having a thickness of 0.38mm was used, and as a plastic film 12, a PET film having a thickness of 50µm was used.

First step: This step is to produce a laminated film A by subjecting a plastic interlayer and a plastic film to a thermocompression bonding.
Second step: This step is to put another plastic interlayer onto the plastic film of the laminated film A produced at first step thereby to produce a laminated film B.
Third step: This step is to insert the laminated film B produced at second step between two curved glass plates thereby to produce a laminated body.
Fourth step: This step is to apply pressure and heat to the laminated body produced at third step by using an autoclave thereby to achieve bonding of entire construction of the laminated glass.
Fifth step: This step is to cut and remove the laminated film that protrudes from edges of the curved glass plates.
At the first step, the curved glass plate 14 was generally horizontally set in such a manner that its projected curved surface was directed upward, and then the plastic interlayer (viz., PVB film) was put on the projected curved surface of the curved glass plate 14.

Then, the PET film tensioned and tightly set to an aluminum frame of 500mm x 600mm in size was put on and pressed to the PVB film (with a pressure of xkgf/m²), and heat of 80°C was applied to them to achieve a thermocompression bonding between the PET film and the PVB film thereby to produce the laminated film A.

Then, by using the second to fifth steps, the plastic film-inserted laminated glass was produced. The autoclave processing at the fourth step was carried out by heating the laminated glass at 130°C and pressing the same at 1MPa for 30 minutes.

The plastic film-inserted laminated glass thus produced showed no wrinkles of the plastic film and had a satisfied external appearance.

### Second Embodiment:

For producing a plastic film-inserted laminated glass of this embodiment, substantially same productions steps as those of the above-mentioned first embodiment were carried out except that in the second embodiment, each of the two curved glass plates (with a size of 250mm x 350mm and a thickness of 2mm) had a radius of curvature ranging from 2.8m to 3m.

The plastic film-inserted laminated glass thus produced showed no wrinkles of the plastic film and had a good external appearance.

### Third Embodiment:

For producing a plastic film-inserted laminated glass of this embodiment, substantially same production steps as those of the above-mentioned first embodiment were carried out except that in the third embodiment, as the plastic film, a PET film having a thickness of 100µm was used and one surface of the PET film was formed with an infrared ray reflecting layer constructed of a multiple layer including a hard coat layer and a dielectric.

As the hard coat layer, there was used an acryl type hard coat layer having a thickness of 5µm, and as the infrared ray reflecting layer, there was used a dielectric multiple layer that was produced by placing on the hard coat layer a TiO₂ film (thickness is 105nm), a SiO₂ film (thickness is 175nm), a TiO₂ film (thickness is 105nm), a SiO₂ film (thickness is 175nm), a TiO₂ film (thickness is 105nm), a SiO₂ film (thickness is 175nm), a TiO₂ film (thickness is 105nm), a SiO₂ film (thickness is 175nm) and a TiO₂ film (thickness is 105nm) in this order through spattering technique.

The hard coat layer and the infrared ray reflecting layer were placed on the projected curved surface of the curved glass plate.

Also the plastic film-inserted laminated glass of this embodiment showed no wrinkles of the plastic film and had a good external appearance.

### Fourth Embodiment:

For producing a plastic film-inserted laminated glass of this embodiment, substantially same production steps as those of the above-mentioned third embodiment were carried out except that in the third embodiment, a PET film having a thickness of 50µm was used.

Also the plastic film-inserted laminated glass of this embodiment showed no wrinkles of the plastic film and had a good appearance.

### First Comparative Example:

Curved glass plates, PVB films and a PET film that are the same as those used in the above-mentioned first embodiment were used, and without forming such a laminated film as that produced by the thermocompression bonding in the first embodiment, one of the glass plates, one of the PVB films, the PET film, the other PVB film and the other glass plate were put on one another in this order to produce a semi-finished laminated product, and then, the semi-finished laminated product was applied with pressure and heat by an autoclave under the same condition as that of the first embodiment thereby to produce the plastic film-inserted laminated glass.

The plastic film-inserted laminated glass thus produced showed wrinkles of the plastic film around a peripheral portion thereof and thus failed to have a satisfied external appearance.

### Second Comparative Example:

For producing this second comparative example, substantially same production steps as those of the above-mentioned first embodiment were carried out except that in this example, there was used the PET film that is used in the third embodiment and forms the hard coat layer and the infrared ray reflecting layer.

The plastic film-inserted laminated glass thus produced showed wrinkles of the plastic film around a peripheral portion thereof, showed cracks in the infrared ray reflecting layer and failed to have a satisfied external appearance and thus it was not suitable for a practical use.

### Brief description of Drawings:

Fig. 1 is a sectional view of a plastic film-inserted laminated glass produced by the present invention.

### Explanation of References:

- 1: plastic film-inserted laminated glass
- 10, 14: curved glass plate
- 11, 13: plastic interlayer
- 12: plastic film

## Claims

1. l A production method of producing a plastic film-inserted laminated glass that comprises a laminated film including a plastic film intimately put between two plastic interlayers, comprising the following steps which are:
a first step for subjecting a plastic interlayer and a plastic film to a thermocompression bonding;
a second step for placing another plastic interlayer on the plastic film that has been subjected to the thermocompression bonding at the first step, thereby to produce a laminated film;
a third step for putting the laminated film produced at the second step between two curved glass plates thereby to produce a laminated body;
a fourth step for applying the laminated body with pressure and heat by using an autoclave thereby to achieve bonding of entire construction of the laminated body; and
a fifth step for cutting and removing the laminated film that protrudes from edges of the curved glass plates,
wherein the first step comprises:
a step (a) in which by using a curved glass plate or a mold plate that has curved shape similar to a projected curved surface of the curved glass plate, the plastic interlayer is put on the projected curved surface of the curved glass plate or the projected surface side of the mold plate;
a step (b) in which a tension is applied to the plastic film;
a step (c) in which the plastic film is put on the plastic interlayer, which has been put on the glass plate or the projected surface side of the mold plate, while being applied with the tension; and
a step (d) in which the plastic interlayer and the plastic film are subjected to the thermocompression bonding.

2. A production method of producing a plastic film-inserted laminated glass as claimed in Claim 1, in which each of the curved glass plates has a radius of curvature that is in the range from 0.9m to 3m.

## Patentansprüche

1. Herstellungsverfahren zum Herstellen eines laminierten Glases mit eingefügtem Kunststofffilm, welches einen laminierten Film umfasst, welcher einen Kunststofffilm enthält, der fest zwischen zwei Kunststoffzwischenschichten angeordnet ist, wobei das Verfahren die nachfolgenden Schritte umfasst:
einen ersten Schritt des Aussetzens eines Kunststoffzwischenfilms und eines Kunststofffilms gegenüber einem Thermokompressionsverbinden;
einen zweiten Schritt des Platzierens einer weiteren Kunststoffzwischenschicht auf den Kunststofffilm, welcher in dem ersten Schritt einem Thermokompressionsverbinden unterzogen worden ist, um dadurch einen laminierten Film herzustellen,
einen dritten Schritt des Einfügens des laminierten Films, welcher bei dem zweiten Schritt hergestellt worden ist, zwischen zwei gebogene Glasplatten, um dadurch einen laminierten Körper herzustellen,
einen vierten Schritt des Anlegens von Druck und Hitze auf den laminierten Körper unter Verwendung eines Autoklaven, um dadurch ein Verbinden der gesamten Konstruktion des laminierten Körpers zu erhalten, und
einen fünften Schritt des Schneidens und Entfernens des laminierten Films, welcher aus Kanten der gebogenen Glasplatten hervorsteht,
wobei der erste Schritt umfasst:
einen Schritt (a), bei dem durch Verwenden einer gebogenen Glasplatte oder einer Formplatte, welche eine gebogene Form ähnlich zu einer gebogenen Projektionsoberfläche der gebogenen Glasplatte aufweist, der Kunststoffzwischenfilm auf die gebogenen Projektionsoberfläche der gebogenen Glasplatte oder die auf die Projektionsoberflächenseite der Formplatte aufgebracht wird,
einen Schritt (b), bei dem auf den Kunststofffilm ein Druck ausgeübt wird,
einen Schritt (c), bei dem der Kunststofffilm auf die Kunststoffzwischenschicht aufgebracht wird, welcher auf die Glasplatte oder die Projektionsoberflächenseite der Formplatte aufgebracht worden ist, während der Druck angelegt wird, und
einen Schritt (d), bei dem die Kunststoffzwischenschicht und der Kunststofffilm einem Thermokompressionsverbinden unterworfen werden.

2. Herstellungsverfahren zum Herstellen eines laminierten Glases mit eingefügten Kunststofffilm nach Anspruch 1, bei dem jede der gebogenen Glasplatten einen Krümmungsradius aufweist, welcher in einem Bereich zwischen 0,9 m und 3 m liegt.

## Revendications

1. Procédé de production pour produire un verre stratifié avec insertion d'un film en matière plastique qui comprend un film stratifié incluant un film en matière plastique placé de manière intime entre deux couches intermédiaires en matière plastique, comprenant les étapes suivantes qui sont :
une première étape pour soumettre une couche intermédiaire en matière plastique et un film en matière plastique à un collage par thermocompression ;
une seconde étape pour placer une autre couche intermédiaire en matière plastique sur le film en matière plastique qui a été soumis au collage par thermocompression lors de la première étape, pour produire ainsi un film stratifié ;
une troisième étape pour placer le film stratifié produit à la seconde étape entre deux plaques en verre incurvées pour produire ainsi un corps stratifié ;
une quatrième étape pour appliquer le corps stratifié sous pression et chaleur en utilisant un autoclave pour réaliser ainsi un collage de la construction entière du corps stratifié ; et
une cinquième étape pour couper et supprimer le film stratifié qui se projette depuis des bordures des plaques en verre incurvées,
dans lequel la première étape comprend :
une étape (a) dans laquelle, en utilisant une plaque en verre incurvée ou
une plaque-moule qui présente une forme incurvée similaire à une surface incurvée en projection de la plaque en verre incurvée, la couche intermédiaire en matière plastique est placée sur la surface incurvée en projection de la plaque en verre incurvée ou sur le côté de surface en projection de la plaque-moule ;
une étape (b) dans laquelle une tension est appliquée au film en matière plastique ;
une étape (c) dans laquelle le film en matière plastique est placé sur la couche intermédiaire en matière plastique, qui a été placée sur la plaque en verre ou sur le côté de la surface en projection de la plaque-moule, tout en lui appliquant la tension ; et
une étape (d) dans laquelle la couche intermédiaire en matière plastique et le film en matière plastique sont soumis au collage par thermocompression.

2. Procédé de production pour produire un verre stratifié avec insertion d'un film en matière plastique, selon la revendication 1, dans lequel chacune des plaques en verre incurvées possède un rayon de courbure qui est dans la plage de 0,9 m à 3 m.
